# EUROPÄISCHE PATENTSCHRIFT

(11) **EP 1 093 014 B1**
(45) Veröffentlichungstag und Bekanntmachung des Hinweises auf die Patenterteilung: **02.05.2001**
(21) Anmeldenummer: 99116723.0
(22) Anmeldetag: 26.08.1999
(51) Int. Cl.: G03B 27/73, G03B 27/80, H04N 1/195

(54) **Vorrichtung zur fotoelektrischen Abtastung von fotografischen Filmen**
Device for photoelectrically scanning photographic films
Dispositif pour le balayage photoélectrique de films photographiques

(43) Veröffentlichungstag der Anmeldung: 18.04.2001
(73) Patentinhaber: GRETAG IMAGING Trading AG, 5430 Wettingen (CH)
(72) Erfinder: Rotach, Hansjörg, 8307 Effretikon (CH); Kobel, Peter, 8957 Spreitenbach (CH); von Tobel, Georg, 5430 Wettingen (CH)
(74) Vertreter: Schwabe - Sandmair - Marx

(56) Entgegenhaltungen:
- EP-A- 0 533 109
- DE-A- 3 823 074
- US-A- 5 218 439
- US-A- 5 663 762

## Beschreibung

Die Erfindung betrifft eine Vorrichtung zur fotoelektrischen Abtastung von fotografischen Filmen gemäss dem Oberbegriff des unabhängigen Anspruchs 1.

Filmabtastvorrichtungen der gattungsgemässen Art werden allgemein für die Bilddigitalisierung sowie auch im Zusammenhang mit klassischen fotografischen Printern oder mit digital arbeitenden Printern eingesetzt. Sie dienen dazu, die auf dem Film enthaltenen Bildstellen bildpunktweise fotoelektrisch abzutasten und in entsprechende elektrische Signale umzuwandeln, welche die in den einzelnen Bildstellen auf dem Film enthaltene Bildinformation repräsentieren.

EP 0 533 109 A2 betrifft einen Fotoprint-Scanner, der dazu verwendet werden soll, entweder ein einzelnes Foto oder ein Foto, das in ein Fotoalbum eingeklebt ist oder dergleichen, zu scannen. Hierzu weist der Scanner einen in Transversalrichtung verschiebbaren Tisch auf, was den Platzbedarf der Vorrichtung erhöht.

US 5,664,762 betrifft eine Abbildungsvorrichtung, um Filmmaterial auf eine CCD-Anordnung abzubilden. Hierzu erfolgt die Focusierung über Tuben.

DE 38 23 074 A1 offenbart einen Printer mit einer drehbaren Filmbühne, um Bilder unterschiedlichen Formats auf Filmvorlagen eines bestimmten Formats umzukopieren. Hierzu weist die Vorrichtung eine um 90° drehbare Filmbühne auf, so dass ein Bild der Filmvorlage bei einer ersten Drehstellung in Längsrichtung und bei einer zweiten Drehstellung in Querrichtung projeziert wird.

US 5,218,439 betrifft ebenfalls eine Vorrichtung, um ein Filmaterial auf eine CCD-Anordnung zu projezieren.

Durch die vorliegende Erfindung soll eine universell einsetzbare Filmabtastvorrichtung geschaffen werden, welche Filme unterschiedlicher Formate verarbeiten kann und dabei trotzdem konstruktiv relativ wenig aufwendig und ausserdem kompakt ist.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche 2 bis 14.

Im folgenden wird die Erfindung anhand der Zeichnung näher erläutert. Es zeigen:
- Fig.1: eine schematische Übersichtsdarstellung der erfindungsgemässen Abtastvorrichtung,
- Fig. 2-3: je eine Detailansicht der Vorrichtung im Schrägriss,
- Fig. 4: einen Axialschnitt durch den Rotor der Vorrichtung,
- Fig. 5: den Rotor der Vorrichtung im Schrägriss,
- Fig. 6: eine weitere Detailansicht im Schrägriss aus einer anderen Blickrichtung,
- Fig. 7-8: zwei Detailansichten der Transport- und Führungsmittel der Abtastvorrichtung und
- Fig. 9-12: verschiedene Detailansichten der Filmzuführungseinrichtung der Abtastvorrichtung jeweils im Schrägriss.

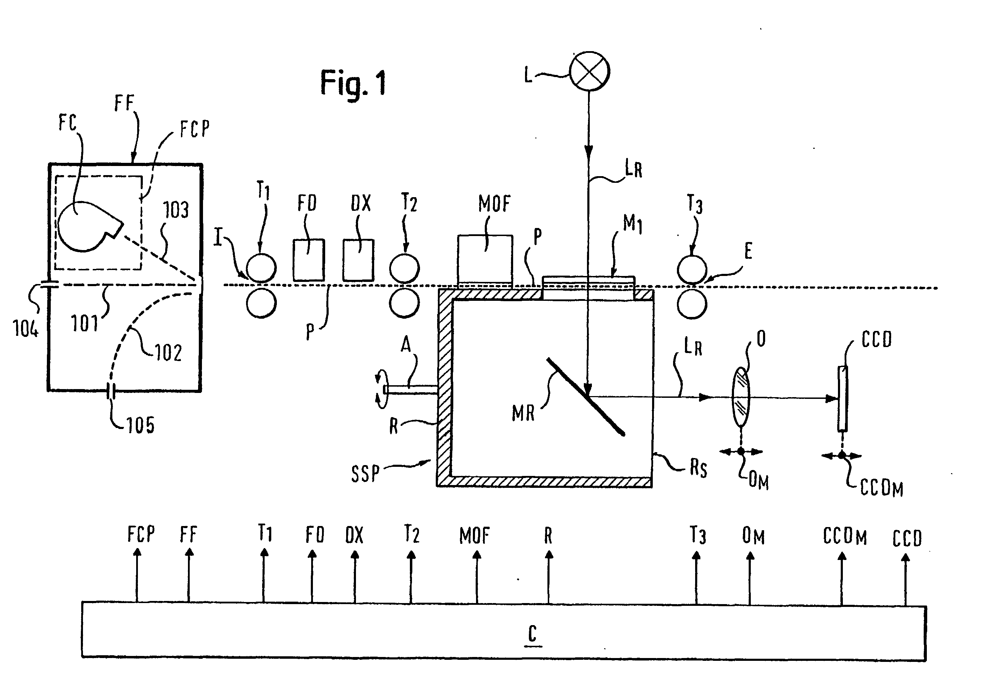

Wie aus der Gesamtdarstellung der Fig. 1 hervorgeht, umfasst die erfindungsgemässe Abtastvorrichtung eine Zuführungseinrichtung FF, um einen abzutastenden Film einem Filmeingang I zuzuführen, motorisch angetriebene Filmtransportmittel T₁-T₃, um den abzutastenden Film längs eines Filmtransportpfads P vom Filmeingang I zu einem Filmausgang E zu transportieren, eine als Ganzes mit SSP bezeichnete, im Filmtransportpfad P angeordnete Filmabtastbühne, um den abzutastenden Film während des Abtastvorgangs zu positionieren, eine Beleuchtungseinrichtung L, um den auf der Filmabtastbühne SSP positionierten Film mit Messlicht zu beaufschlagen, einen fotoelektrischen Wandler CCD, um vom Film durchgelassenes Messlicht zu empfangen und bildpunktweise in entsprechende elektrische Signale umzuwandeln, eine Optik O, um das vom Film durchgelassene Messlicht auf den fotoelektrischen Wandler CCD zu lenken, und eine elektronische Steuerung C für die genannten und weitere Elemente der Abtastvorrichtung. Ferner ist im Filmtransportpfad P vor der Filmabtastbühne SSP, speziell zwischen den Transportmitteln T₁ und T₂, ein an sich bekannter fotoelektrischer Lesekopf DX für auf dem Film befindlichen DX-Code sowie ein ebenfalls an sich bekannter fotoelektrischer Abtastkopf (Frame Detektor) FD zur Erfassung der Lage der einzelnen Bildstellen (Frames) des abzutastenden Films vorgesehen, wobei der Lesekopf DX und der Abtastkopf FD ebenfalls mit der Steuerung C zusammenarbeiten.

Die Beleuchtungseinrichtung L umfasst vorzugsweise als LED (Licht emittierende Dioden) ausgebildete Lichtquellen der bei Abtasteinrichtungen üblichen Farben rot, blau und grün und ggf. auch infrarot sowie eine zugehörige Lichtmischeinrichtung, aus welcher das Messlicht homogenisiert austritt. Der fotoelektrische Wandler CCD ist vorzugsweise als an sich bekanntes zweidimensionales Feld von fotoelektrischen Wandlerelementen, insbesondere CCD-Elementen (charge coupled devices) ausgebildet. Die Transportmittel T₁-T₃ umfassen im wesentlichen motorisch angetriebene Walzen bzw. Walzenpaare sowie diverse Führungsorgane, wobei der oder die in Fig. 1 nicht dargestellten Antriebsmotoren von der Steuerung C angesteuert werden.

In dieser Allgemeinheit entspricht die dargestellte Filmabtastvorrichtung voll und ganz herkömmlichen Filmabtastvorrichtungen dieser Art, so dass der Fachmann soweit keiner näheren Erläuterung bedarf. Das Besondere der erfindungsgemässen Filmabtastvorrichtung besteht in der speziellen Ausbildung der Filmabtastbühne SSP und der damit zusammenhängenden konstruktiven Details sowie in der speziellen Ausbildung der Filmzuführungseinrichtung FF und der Transportmittel T₁-T₃ und diverser Führungsmittel für den abzutastenden Film. Im folgenden wird darauf näher eingegangen.

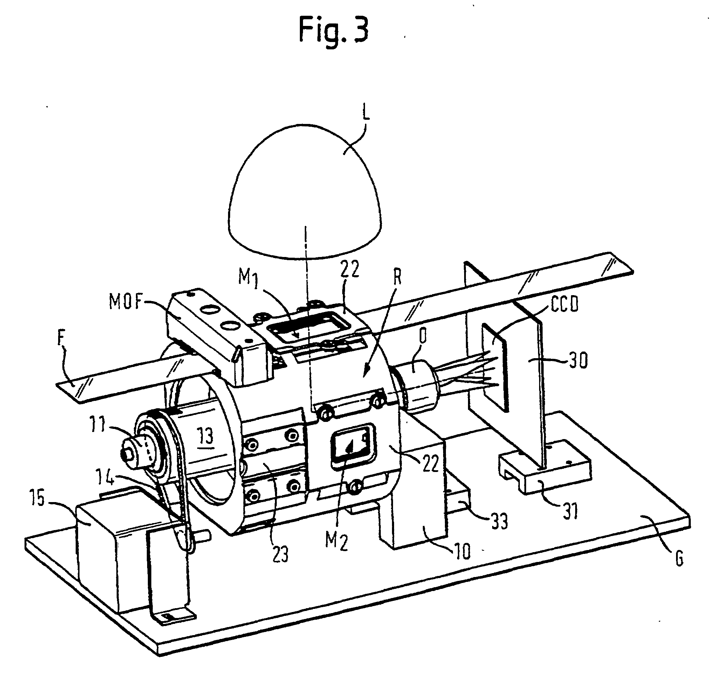

Gemäss einem ersten wesentlichen Aspekt der Erfindung umfasst die Filmabtastbühne SSP einen hohlen Rotor R, der um eine Achse A drehverstellbar gelagert ist und der an seiner einen Stirnseite Rₛ offen ausgebildet ist. Die Drehachse A des Rotors R ist im wesentlichen parallel zur Längsrichtung des Filmtransportpfads P ausgerichtet, wobei umgekehrt der letztere im Bereich des Rotors R jeweils längs einer achsparallelen Mantellinie des Rotors R verläuft. Der Rotor R ist von einem aus Fig. 3 ersichtlichen Motor 15 angetrieben, der von der Steuerung C gesteuert wird.

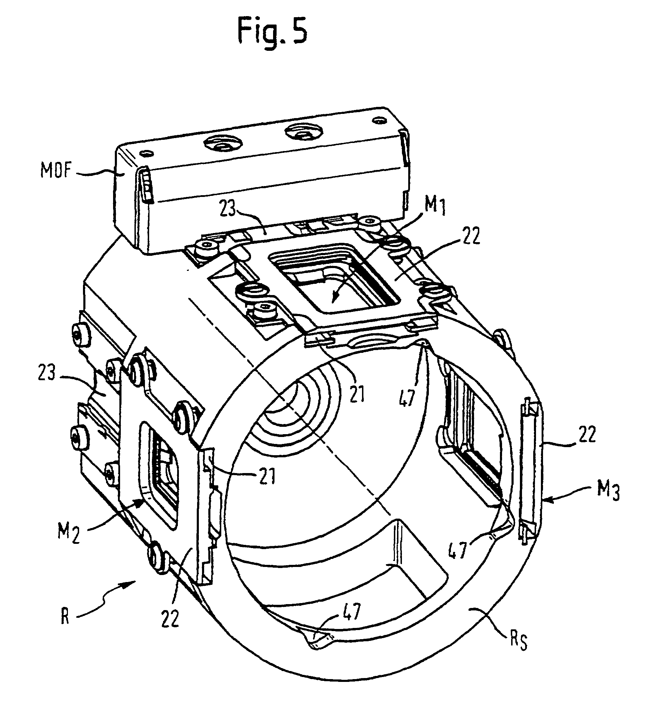

Längs des Umfangs des Rotors R sind im gezeigten Ausführungsbeispiel drei Filmmaskenanordnungen M₁-M₃ angeordnet (siehe auch Fig. 5), welche für Filme unterschiedlicher Formate, insbesondere APS-Film, 135er-Film und 110er-Film, ausgelegt sind und in an sich bekannter Weise zur Positionierung des abzutastenden Films auf der Abtastbühne SSP bzw. dem Rotor R dienen. Die Filmmaskenanordnungen M₁-M₃ sind weiter unten noch näher beschrieben, an dieser Stelle sei lediglich erwähnt, dass die Rotorwand im Bereich der Filmmaskenanodnungen durchbrochen und damit lichtdurchlässig ausgebildet ist. Durch Drehverstellung des Rotors R kann jeweils eine der drei Filmmaskenanordnungen M₁-M₃ selektiv in den Filmtransportpfad P eingeführt bzw. wieder aus diesem herausbewegt werden.

Im Inneren des hohlen Rotors R ist ortsfest ein um 45° zur Achse A geneigter Umlenkspiegel MR angeordnet. Von der Beleuchtungseinrichtung L ausgehendes Messlicht durchsetzt den mittels der jeweils im Filmtransportpfad P befindlichen Filmmaskenanordnung auf dem Rotor R positionierten Film und tritt radial in den Rotor R ein. Der Umlenkspiegel MR lenkt den Strahlengang L_{R} des Messlichts um 90° um, so dass das Messlicht im wesentlichen in axialer Richtung durch die offene Stirnseite R_{S} des Rotors R aus diesem austritt und der Optik (Objektiv) O zugeführt wird. Diese bildet dann in an sich bekannter Weise den von der Filmmaskenanordnung begrenzten Bereich (Bildstelle, Frame) des Films auf den fotoelektrischen Wandler CCD ab. Damit die aktive Fläche des fotoelektrischen Wandlers CCD unabhängig vom Filmformat und dessen typischen Bildstellenabmessungen (Frame-Grösse) optimal ausgenützt werden kann, sind der fotoelektrische Wandler CCD und die Optik O in Richtung parallel zur Achse A verschiebbar gelagert. Die Verschiebung erfolgt gesteuert von der Steuerung C mittels nicht dargestellter Antriebsmotoren, welche in Fig. 1 durch Pfeile O_{M} und CCD_{M} symbolisiert sind.

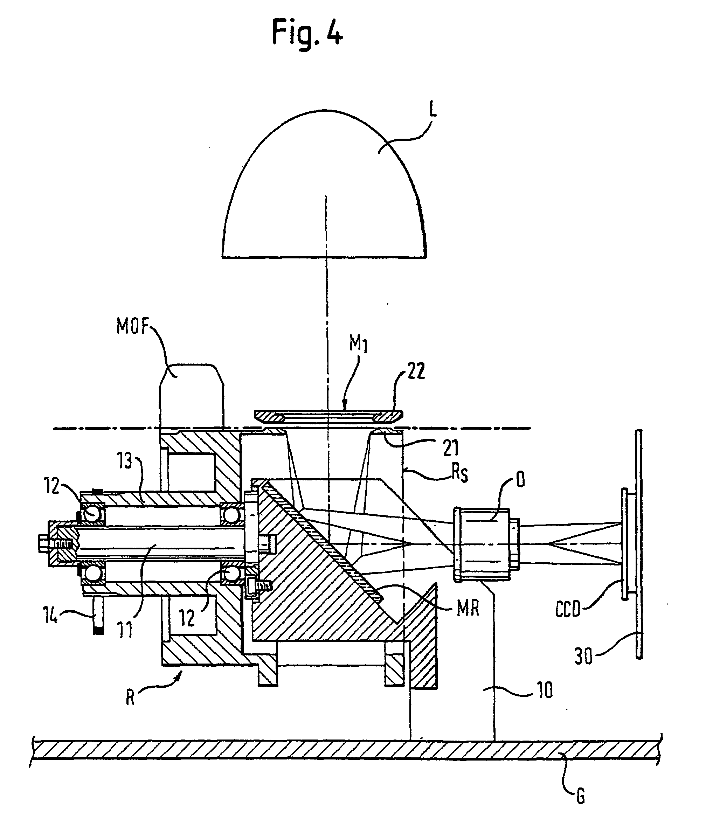

Der Aufbau der Filmabtastbühne SSP bzw. deren Rotors R wird aus der Schnittdarstellung der Fig. 4 deutlich. Auf einer Grundplatte G ist ein Träger 10 befestigt, welcher im wesentlichen aus nicht näher bezeichneten, zur Grundplatte senkrechten und zur Grundplatte parallelen Schenkelteilen besteht. Die parallelen Schenkelteile ragen durch die offene Stirnseite R_{S} des Rotors R in diesen hinein. Zwischen den parallelen Schenkelteilen ist der Umlenkspiegel MR so montiert, dass er unter 45° zur Grundplatte G geneigt ist. Am freien Ende der parallelen Schenkelteile ist eine sich parallel zur Grundplatte G erstreckende Lagerwelle 11 befestigt. Auf dieser ist mittels zweier Kugellager 12 und eines am Rotor R ausgebildeten Lagerrohrs 13 der Rotor R drehbar gelagert. Das Lagerrohr 13 und damit der Rotor R ist mittels eines Antriebsriemens 14 von einem Motor 15 (Fig, 3) angetrieben.

Die auf dem Rotor R längs dessen Umfangs verteilt angeordneten Filmmaskenanordnungen M₁-M₃ bestehen jeweils im wesentlichen aus einer Auflagemaske 21 und einer Andruckmaske 22, die im geringen Abstand über der Auflagemaske angeordnet und federnd gehalten ist, so dass zwischen der Auflagemaske und der Andruckmaske ein schmaler Spalt bleibt, durch den der abzutastende Film hindurchgeführt wird (Fig. 5). Die Auflagemaske 21 ist kein separates Teil, sondern jeweils direkt in der Umfangswand des Rotors R ausgebildet. Die lichtdurchlässigen Fenster der Auflagemaske 21 und der Andruckmaske 22 sind an die Bildstellengrösse (Frame-Grösse) des Filmformats, für den die betreffende Filmmaskenanordnung ausgelegt ist, angepasst.

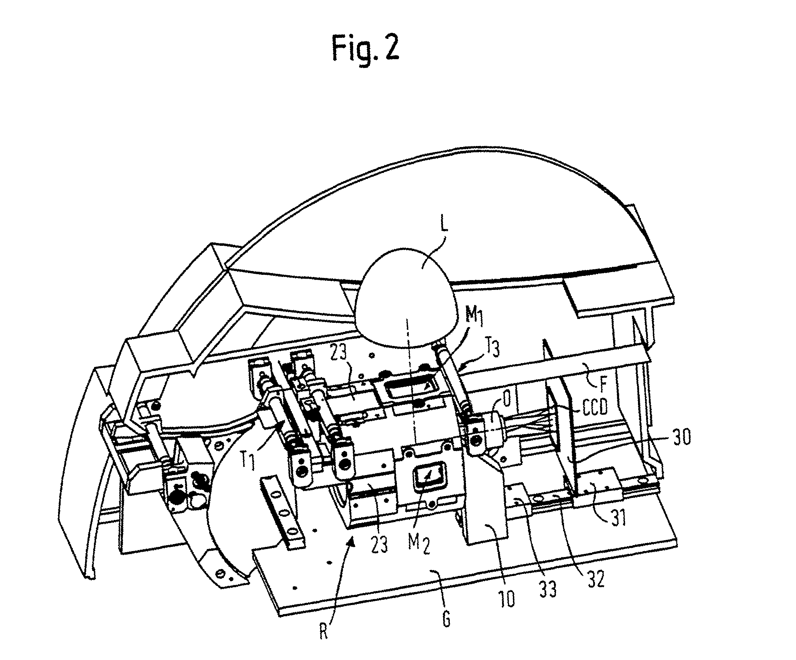

In Zuordnung zu jeder Filmmaskenanordnung M₁-M₃ ist auf dem Umfang des Rotors R je eine Filmführung 23 vorgesehen, die auf die Breite des jeweiligen Filmformats abgestimmt ist. Jede Filmführung 23 verläuft parallel zur Drehachse A des Rotors R und liegt bei entsprechender Drehstellung des Rotors R im Filmtransportpfad P, so dass sie den von den Transportmitteln T₂ übergebenen abzutastenden Film F (Fig. 2) entlang des Filmtransportpfads P direkt in die zugeordnete Filmmaskenanordnung hineinleitet.

In Zuordnung zu derjenigen Filmmaskenanordnung M₁, die für APS-Film ausgelegt ist, ist oberhalb der Filinführung 23 ein an sich bekannter Magnetlesekopf MOF für auf APS-Film befindliche magnetisch aufgezeichnete Information angeordnet. Durch Drehverstellung des Rotors R wird dieser Magnetlesekopf MOF zusammen mit der zugehörigen Fflmmaskenanordnung M₁ in den Filmtransportpfad P eingeschwenkt bzw. wieder aus diesem herausbewegt. Der Magnetlesekopf MOF arbeitet in an sich bekannter Weise mit der Steuerung C zusammen und ist vorzugsweise mit einer abnehmbaren bzw. aufklappbaren Abdeckhaube versehen, so dass er einfach gereinigt werden kann und keine speziellen Filmreinigungsstreifen erforderlich sind.

Die Fig. 3 zeigt den Rotor R und seinen Antrieb im Schrägriss. In Fig. 2 ist erkennbar, wie der fotoelektrische Wandler CCD und die Optik O verschiebbar gelagert sind. Der Wandler CCD ist auf einer Printplatte 30 montiert, die auf einem Schlitten 31 befestigt ist. Dieser ist auf einer an der Grundplatte G angeordneten Schiene 32 verschiebbar gelagert. Analog ist die Optik O über einen nicht sichtbaren Träger auf einem Schlitten 33 montiert, welcher ebenfalls auf der Schiene 32 verschiebbar gelagert ist. Die Verschiebung der beiden Schlitten 31 und 33 erfolgt durch nicht gezeigte Antriebsmotoren über die Steuerung C.

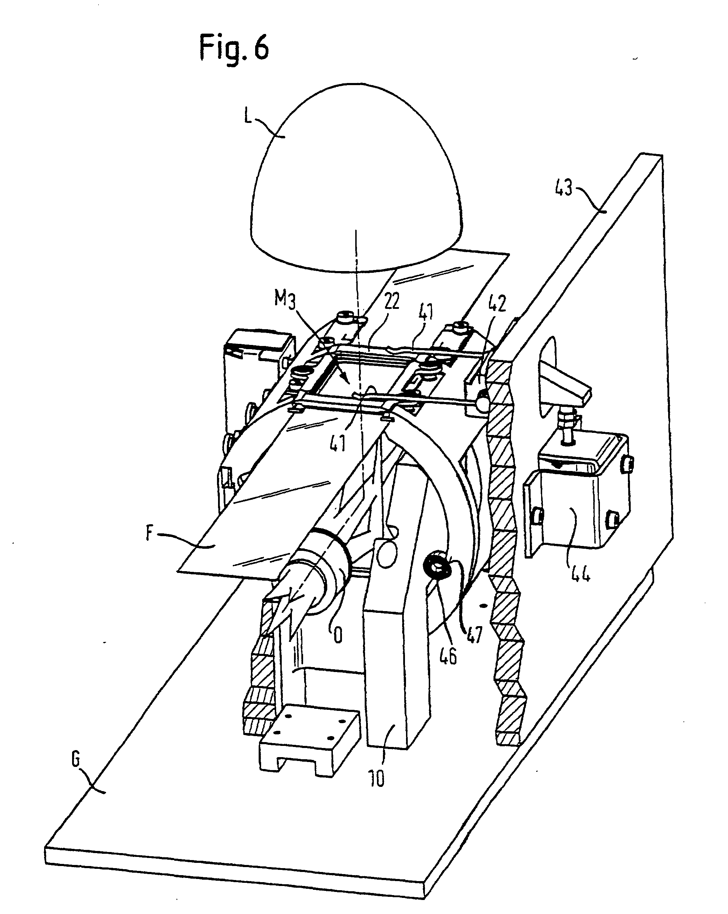

Aus Fig. 6 ist erkennbar, wie die Andruckmasken 22 der Filmmaskenanodnungen M1-M3 während der Abtastung einer Bildstelle des Films F gegen die jeweils darunterliegenden Auflagemasken 21 gedrückt werden. Oberhalb der Andruckmaske 22 der im Filmtransportpfad befindlichen Filmmaskenanordnung M₃ befinden sich zwei Federbügel 41, die in einem Klotz 42 eingespannt sind und auf der Andruckmaske 22 aufliegen. Der Klotz 42 ist in einer Montagewand 43 kippbar gelagert und mittels eines von der Steuerung C angesteuerten Hubmagneten 44 angetrieben. Durch entsprechende Steuerung des Hubmagneten 44 können die beiden Federbügel 41 auf und nieder bewegt werden, wobei die Andruckmaske 22 federnd gegen die darunterliegende Auflagemaske gedrückt bzw. wieder freigegeben wird. Bei niedergedrückter Andruckmaske 22 wird der zwischen der Auflagemaske und der Andruckmaske durchgeführte Film F für die Belichtung (Abtastung) in der Filmmaskenanordnung festgeklemmt und damit auf dem Rotor R positioniert. Nach der Abtastung jeweils einer Bildstelle des Films F werden die Federbügel 41 wieder angehoben und damit der Film wieder für den Weitertransport freigegeben.

Der Rotor R wird mittels des Antriebsmotors 15 in seine verschiedenen diskreten Drehstellungen verfabren, bei denen sich jeweils eine der Filmmaskenanordnungen im Filmtransportpfad befinden. In diesen diskreten Drehstellungen wird der Rotor R rastend festgehalten. Dazu sind am Träger 10 eine federnd angeordnete Rastrolle 46 und an der Innenseite der Rotorwand in räumlicher Zuordnung zu den drei Filmmaskenanordnungen drei Rastkerben 47 vorgesehen. Die Rastrolle 46 und eine der Rastkerben 47 sind aus Fig. 6 ersichtlich, zwei weitere Rastkerben 47 aus Fig.5..

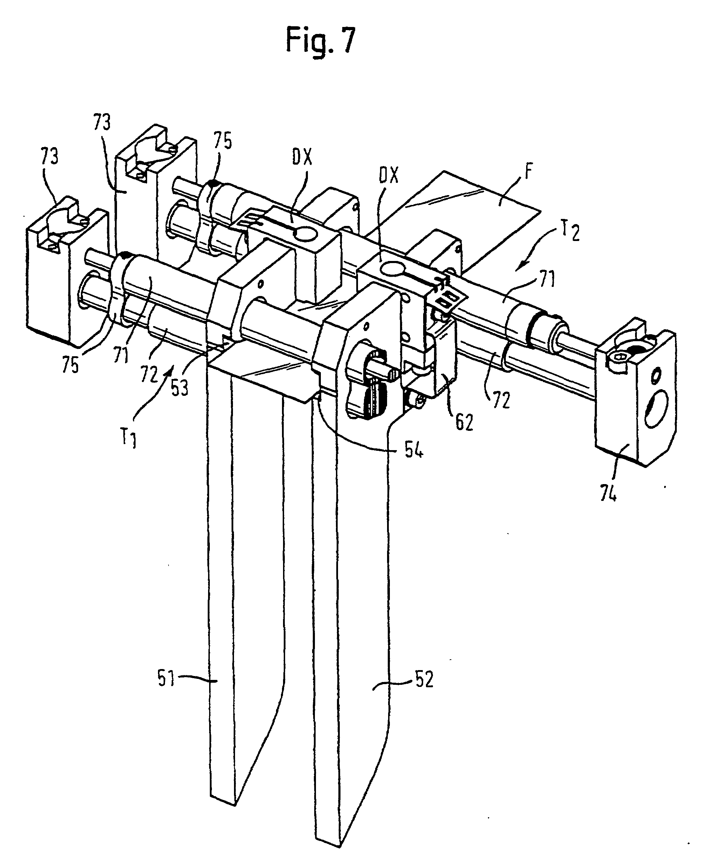

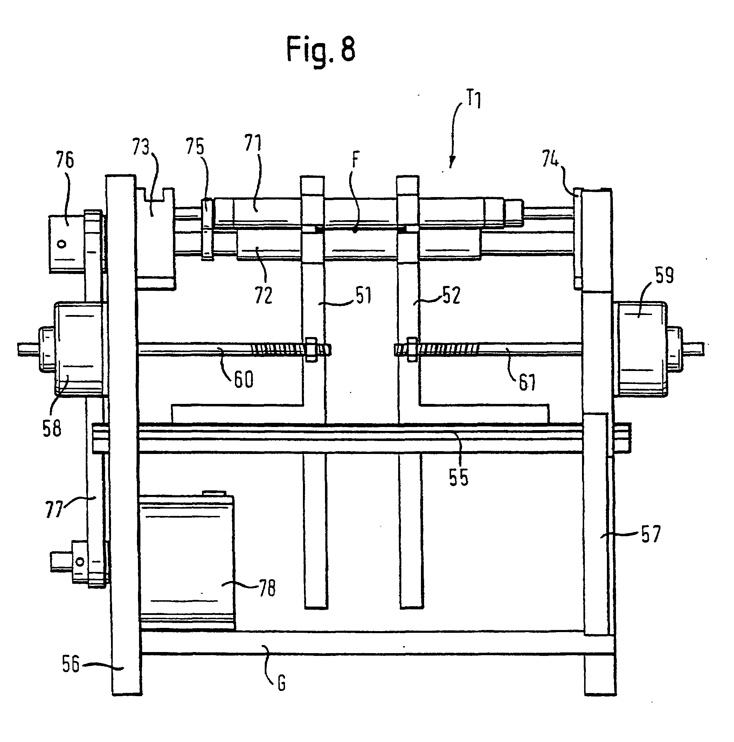

Die Figuren 7 und 8 zeigen die Ausbildung der Transportmittel T₁-T₃ am Beispiel der in Transportrichtung vor dem Rotor R liegenden Transportmittel T₁ und T₂.

Im Bereich vor dem Rotor R ist der abzutastende Film F zwischen zwei zur Grundplatte G im wesentlichen senkrechten Führungsplatten 51 und 52 (Fig. 7) geführt, wobei er mit seinen seitlichen Rändern in je einer in den Führungsplatten vorgesehenen Führungsnut 53 bzw. 54 läuft. Die beiden Führungsplatten 51 und 52 sind auf einer ortsfesten Schiene 55 (Fig. 8) quer zur Längsrichtung des Films F verstellbar angeordnet, so dass ihr gegenseitiger Abstand auf die Breite des jeweiligen abzutastenden Films F eingestellt werden kann. Zum Antrieb der beiden Führungsplatten sind zwei an je einer Montagewand 56 bzw. 57 angeordnete und von der Steuerung C angesteuerte Spindelmotoren 58 bzw. 59 vorgesehen, welche über ihre Spindeln 60 und 61 mit je einer der beiden Führungsplatten 51 und 52 gekoppelt sind. An den beiden Führungsplatten 51 und 52 sind zwei fotoelektrische DX-Code-Leseköpfe DX befestigt und mittels je einer Blattfeder 62 leicht federnd aufeinander zu vorgespannt, so dass sie federnd am seitlichen Rand des abzutastenden Films F anliegen. Durch das Vorhandensein von zwei gegenüberliegenden Leseköpfen spielt es keine Rolle, wie der Film F in die Abtastvorrichtung eingeführt wird. Die Leseköpfe DX können neben dem DX-Code auch die Perforation von 110er- und APS-Film erfassen.

Die seitliche Führung des abzutastenden Films zwischen den individuell verstellbaren Führungsplatten hat den Vorteil, dass die Führungsplatten asymmetrisch verstellt werden können, was z.B. bei 110er-Filmen eine bessere Ausnützung des fotoelektrischen Wandlers CCD und damit eine bessere Auflösung der Abtastung erlaubt.

Die Transportmittel T₁ und T₂ (und auch die hier nicht sichtbaren Transportmittel T₃) umfassen jeweils zwei federnd aneinander anliegende Walzen 71 und 72, welche an ihren Enden in Lagerblöcken 73 und 74 drehbar gelagert sind und in der Nähe eines Endes mittels eines Bügels 75 zusammengehalten werden. Die Lagerblöcke 73 und 74 sind in den beiden Montagewänden 56 und 57 befestigt und enthalten jeweils eine einstellbare Feder zum Gegeneinanderdrücken der beiden Walzen. Die beiden Walzen 71 und 72 sind durch nicht bezeichnete Öffnungen in den beiden Fühnrungsplatten 51 und 52 hindurchgeführt und liegen oberhalb bzw. unterhalb der durch die Mittelebene der Führungsnuten 53 und 54 definierten Filmtransportebene. Jeweils die in der Zeichnung untere Transportwalze 72 ist lösbar drehfest mit einer Riemenscheibe 76 gekoppelt, die über einen Riemen 77 von einem an der Montagewand 56 angeordneten Antriebsmotor 78 angetrieben ist. Die Lagerblöcke 74 sind lösbar in der Montagewand 57 befestigt. Die beiden Walzen 71 und 72 sind in die Lagerblöcke 73 nur eingesteckt und können nach Lösung der Lagerblöcke 74 zusammen mit diesen in axialer Richtung als Ganzes seitlich (in der Fig. 7 nach rechts) herausgezogen werden, wobei die Bügel 75 ein Auseinanderspringen der jeweils zusammengehörenden Walzen verhindern. Auf diese Weise können die Walzen 71 und 72 einfach ausgetauscht bzw. gereinigt werden.

Für die Einspeisung des abzutastenden Films F ist die schon erwähnte Filmzuführungseinrichtung FF dem Filmeingang I vorgeschaltet (Fig. 1). Diese Filmzuführungseinrichtung FF ist so ausgebildet, dass sie Film über drei verschiedene Wege zum Filmeingang I hinführen kann. Ein erster Weg 101 dient z.B. im Zusammenhang mit Nachbestellungsaufträgen zur manuellen Zufuhr von Filmstreifen an einer Filmeingabestelle 104. Ein zweiter Weg 102 ist für die automatische Übernahme eines z.B. von einer Filmentwicklungsvorrichtung kommenden Films an einer Filmeingabestelle 105 vorgesehen. Ein dritter Weg 103 schliesslich dient zur Zufuhr von aus einer Filmpatrone FC mittels einer Abspuleinrichtung FCP automatisch entnommenern APS-Film.

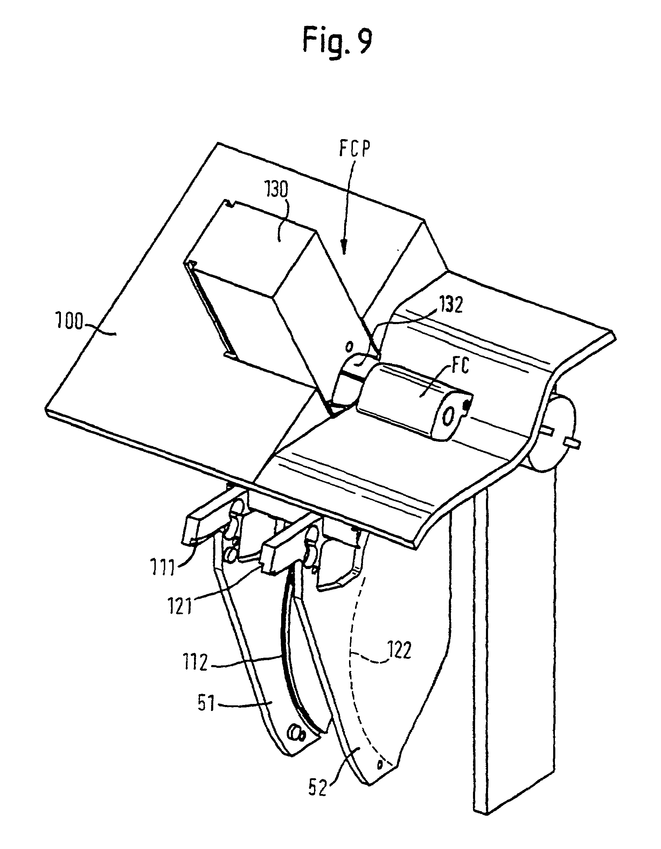

Die Filmzuführungseinrichtung FF ist in den Figuren 9-12 näher dargestellt. Sie umfasst neben der schon erwähnten Abspuleinrichtung FCP zwei Führungsorgane in Form der beiden schon in den Figuren 7 und 8 gezeigten Führungsplatten 51 und 52, welche mittels der Spindelmotoren 58 und 59 auf einander zu bzw. von einander weg verstellt werden können, so dass ihr Abstand auf die Breite des zuzuführenden Films eingestellt werden kann.

In den beiden Führungsplatten 51 und 52 sind an ihren Innenseiten jeweils eine zur Grundplatte im wesentlichen gerade Führungsnut 111 bzw. 121 und eine gekrümmte Führungsnut 112 bzw. 122 (strichliert angedeutet) angeordnet, welche jeweils in die in Fig. 7 gezeigten Führungsnuten 53 und 54 übergehen bzw. münden. Die beiden geraden Führungsnuten 111 und 121 bilden eine im wesentlichen geradlinige Führungsbahn für die manuelle Zufuhr von Film längs des ersten Wegs 101, die beiden gekrümmten Führungsnuten 112 und 122 bilden eine gekrümmte Führungsbahn für die automatische bzw. motorisch angetriebene Zufuhr eines Films von einer Filmentwicklungseinrichtung längs des zweiten Wegs 102. Die geradlinige und die gekrümmte Führungsbahnen leiten den in ihnen an seinen Seitenrändern geführten Film bis unmittelbar an den Filmeingang I, wo der Film von den Transportmitteln T₁ erfasst und dann weitertransportiert wird.

Im folgenden wird die in der Filmzuführungseinrichtung FF enthaltene Abspulvorrichtung FCP anhand der Figuren 9-12 näher erläutert. Diese Abspulvorrichtung kann nicht nur in der vorliegenden Abtastvorrichtung, sondern auch in anderen Filmverarbeitungsvorrichtungen eingesetzt werden.

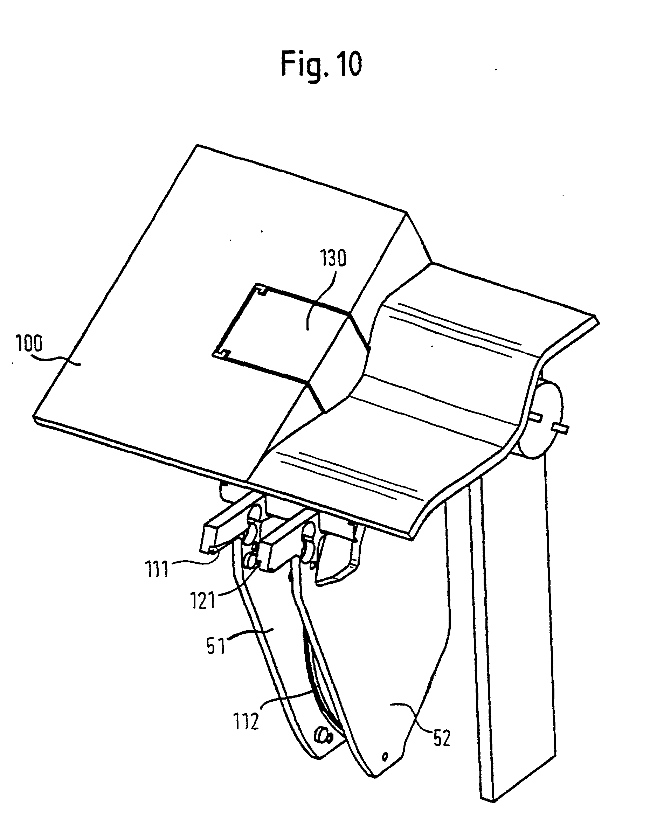

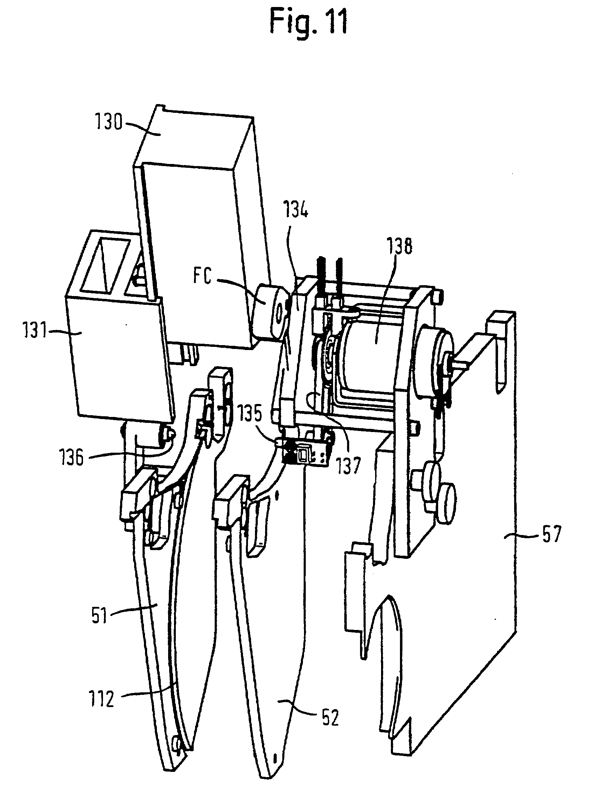

Die Abspulvorrichtung FCP umfasst als zentrales Element einen in einer ortsfesten Liftführung 131 (Fig. 11) linear verschiebbaren Patronenlift 130, der in einer Ladestellung aus einer oberen Gehäuseabdeckung 100 der Abtastvorrichtung herausragt (Fig. 9) und manuell entlang der Liftführung unter die Gehäuseabdeckung in das Gehäuse der Abtastvorrichtung hinein in eine Entladestellung bewegt und dort vorübergehend arretiert werden kann (Fig. 10). Nach Lösung der Arretierung bewegt sich der Patronenlift 130 z.B. durch Federkraft automatisch wieder in seine Ladestellung zurück. Der Patronenlift 130 weist eine beidseits offene Patronenkammer 132 auf, die in ihrem Querschnitt der Form einer APS-Filmpatrone angepasst ist. In Ladestellung des Patronenlifts 130 befindet sich die Patronenkammer 132 knapp oberhalb der Gehäuseabdeckung 100, so dass eine Filmpatrone FC seitlich in die Patronenkammer eingeführt werden kann. Durch die Abwärtsbewegung des Patronenlifts 130 wird dann die in der Patronenkammer 132 befindliche Filmpatrone FC unter die Gehäuseabdeckung 100 in eine Entladestellung transportiert, in welcher sie sich zwischen den beiden Führungsplatten 51 und 52 befindet.

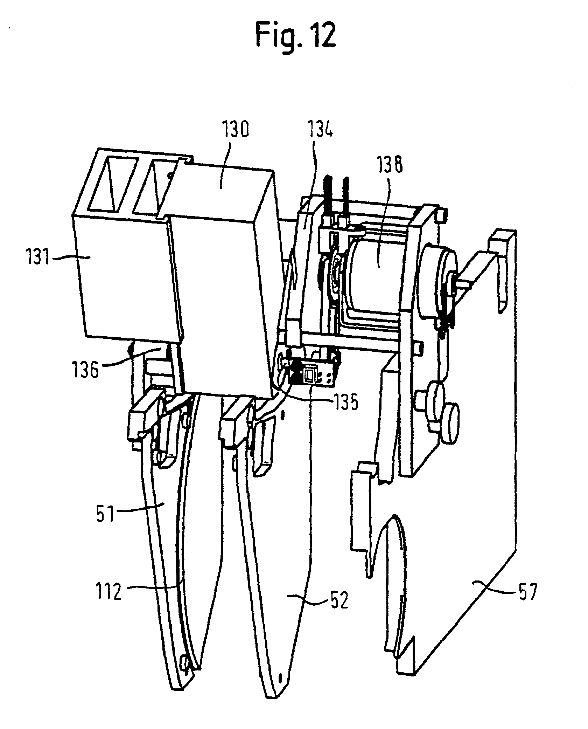

Die Figuren 11 und 12 zeigen die Filmzuführungseinrichtung bei abgenommener Gehäuseabdeckung mit dem Patronenlift 130 und einer in ihm befindlichen Filmpatrone FC in Ladestellung bzw. in Entladestellung.

In der Patronenkammer 132 ist eine nicht gezeigte Feder angeordnet, welche die Filmpatrone FC aus der Patronenkammer 132 herauszudrücken bestrebt ist. Die Einführung der Patrone in die Kammer erfolgt also entgegen der Kraft dieser Feder.

Während der Abwärtsbewegung des Patronenlift 130 gleitet die Filmpatrone FC in federnder Anlage längs einer Anschlagwand 134. Sobald der Patronenlift 130 bzw. die Filmpatrone FC die Entladestellung erreicht (Fig. 12), kommt die Filmpatrone FC von der Anschlagwand 134 frei und gleitet axial auf einen dort angeordneten Antriebsdorn 135 auf, so dass dieser mit dem in der Filmpatrone FC befindlichen Wickelkern in Eingriff kommt. Gleichzeitig greift ein an der Führungsplatte 51 befestigter Lagerdorn 136 von der gegenüberliegenden Seite in die Patronenkammer 132 ein und bildet so ein Gegenlager für den Wickelkern der Filmpatrone FC. Durch den Lagerdorn 136 wird ausserdem der Patronenlift 130 in seiner Entladestellung arretiert.

Der Antriebsdorn 135 ist über einen Riemen 137 von einem von der Steuerung C gesteuerten Antriebsmotor 138 angetrieben, welcher ortsfest an der Montagewand 57 angeordnet ist. Sobald der Antriebsdorn 135 an den Wickelkem in der Filmpatrone FC drehfest angekoppelt ist, wird er in Rotation versetzt, wobei der in der Filmpatrone FC befindliche ABS-Film aus der Patrone ausgestossen und unmittelbar zum Filmeingang I vorgeschoben wird, wo er von den Transportmitteln T₁ erfasst und weitertransport wird. Wenn der bildtragende Teil des APS-Films vollständig aus der Patrone entnommen ist und alle auf dem Film vorhandenen Bildstellen abgetastet sind, wird der Film wieder in die Filmpatrone FC zurückgezogen und aufgespult. Dann wird die Führungsplatte 51 soweit (in der Zeichnung) nach links bewegt, bis der Lagerdorn 136 nicht mehr in die Patronenkammer 132 eingreift. Dadurch wird die Arretierung des Patronenlifts 130 wieder aufgehoben. Gleichzeitig wird auch die Führungsplatte 52 etwas nach links bewegt, um die Filmpatrone FC etwas axial in die Patronenkammer hinein zu versetzen, so dass die Filmpatrone FC wieder hinter der Anschlagwand 134 zu liegen kommt und sich der Patronenlift 130 zusammen mit der den abgetasteten Film enthaltenden Filmpatrone FC ungehindert nach oben in seine Ladestellung bewegen kann. Dort angekommen wird dann die Filmpatrone FC durch Fedeikrft aus der Patronenkammer 132 ausgeworfen.

Die Zufuhr der Filmpatronen FC von oben mittels des Patronenlifts 130 ist besonders platzsparend. Durch die Anordnung des Lagerdorns 136 an der beweglichen Führungsplatte 51 kann ein separater Antrieb für den Lagerdorn entfallen.

Über den Weg 102 von einer Entwicklungsvorrichtung motorisch zugeführter Film F verlässt die Abtastvorrichtung nach seiner Abtastung am Filmausgang E. Über den Weg 101 manuell zugeführter Film F kann die Abtastvorrichtung ebenfalls am Filmausgang E verlassen. Vorzugsweise wird jedoch solcher meist im Zusammenhang mit Nachbestellungen manuell eingespeister Film nach der Abtastung mittels der Trans-. portmittel T₁-T₃ wieder über den Weg 101 ausgestossen. Gegebenenfalls kann auch ein Weichensystem vorgesehen sein, um den abgetasteten Film z.B. in ein Ablagefach oder dgl. zu leiten.

## Patentansprüche

1. Vorrichtung zur fotoelektrischen Abtastung von fotografischen Filmen mit einem Filmeingang (I), einem Filmausgang (E), einem den Filmeingang mit dem Filmausgang verbindenden Filmtransportpfad (P), Transportmitteln (T₁, T₂, T₃), um einen am Filmeingang zugeführten abzutastenden Film (F) längs des Filmtransportpfads zum Filmausgang zu transportieren, einer im Filmtransportpfad angeordneten Abtastbühne (SSP) zur Positionierung des Films während seiner Abtastung, einer Beleuchtungseinrichtung (L), um den Film im Bereich der Abtastbühne mit Messlicht zu beaufschlagen, mit einem fotoelektrischen Wandler (CCD), um vom Film durchgelassenes Messlicht zu empfangen und bildpunktweise in entsprechende elektrische Signale umzuwandeln, und mit einer Optik (O), um das vom Film durchgelassene Messlicht auf den Wandler zu lenken, dadurch gekennzeichnet, dass zur Verarbeitung von Filmen unter schiedlicher Filmformate die Abtastbühne (SSP) einen Rotor (R) aufweist, welcher um eine zur Längsrichtung des Filmtransportpfads im wesentlichen parallele Achse (A) drehverstellbar gelagert ist, und dass der Rotor (R) an seinem Umfang mindestens zwei Filmmaskenanodnungen (M₁, M₂, M₃) für die unterschiedlichen Filmformate aufweist, welche Filmmaskenanordnungen (M₁, M₂, M₃) durch Drehverstellung des Rotors (R) selektiv in den Filmtransportpfad (P) eingeführt werden können

2. Vorrichtung nach Anspruch 1, dadurch gekennzeichnet, dass der Rotor (R) hohl ist und eine offen ausgebildete Stirnseite (R_{S}) aufweist und dass im Inneren des Rotors (R) ein feststehender Umlenkspiegel (MR) angeordnet ist, welcher den durch die jeweils im Filmtransportpfad (P) befindliche Filmmaskenanordnung (M₁, M₂, M₃) im wesentlichen radial in den Rotor eintretenden Strahlengang (L_{R}) des Messlichts so umlenkt, dass er den Rotor (R) durch dessen offene Stirnseite (R_{S}) in im wesentlichen axiale Richtung verlässt.

3. Vorrichtung nach einem der vorangehenden Ansprüche, dadurch gekennzeichnet, dass eine der mindestens zwei Filmmaskenanordnungen (M₁, M₂, M₃) für das APS-Filmformat ausgebildet ist, und dass der Rotor (R) an seinem Umfang mit einem Magnetlesekopf (MOF) für die auf APS-Filmen befindliche magnetisch aufgezeichnete Information ausgestattet ist, welcher Magnetlesekopf (MOF) gemeinsam mit der für das APS-Filmformat ausgebildeten Filmmaske (M₁) in den Filmtransportpfad (P) einbringbar und wieder aus diesem entfernbar ist.

4. Vorrichtung nach Anspruch 3, dadurch gekennzeichnet, dass der Magnetlesekopf (MOF) mit einer abnehmbaren bzw. aufklappbaren Abdeckung versehen ist.

5. Vorrichtung nach einem der vorangehenden Ansprüche, dadurch gekennzeichnet, dass der Rotor (R) an seinem Umfang in Zuordnung zu je einer Filmmaskenanordnung (M₁, M₂, M₃) mit zu seiner Drehachse (A) parallelen Filmführungen (23) versehen ist, die gemeinsam mit der jeweils zugeordneten Filmmaske (M₁, M₂, M₃) selektiv in den Filmtransportpfad (P) einbringbar sind.

6. Vorrichtung nach einem der vorangehenden Ansprüche, dadurch gekennzeichnet, dass der fotoelektrische Wandler (CCD) und die Optik (O) in Abhängigkeit von der jeweils im Filmtransportpfad (P) befindlichen Filmmaskenanordnung (M₁, M₂, M₃) motorisch verstellbar sind.

7. Vorrichtung nach einem der vorangehenden Ansprüche, dadurch gekennzeichnet, dass im Filmtransportpfad (P) vor dem Rotor (R) mindestens ein fotoelektrischer Lesekopf (DX) für auf Filmen enthaltenen DX-Code vorgesehen ist.

8. Vorrichtung nach Anspruch 7, dadurch gekennzeichnet, dass der mindestens eine Lesekopf (DX) so angeordnet ist, dass er auch die Perforation von abzutastendem Film (F) erfassen kann.

9. Vorrichtung nach einem der vorangehenden Ansprüche, dadurch gekennzeichnet, dass im Filmtransportpfad (P) vor dem Rotor (R) ein fotoelektrischer Abtastkopf (FD) zur Erfassung von auf dem Film enthaltenen Bildstellen vorgesehen ist.

10. Vorrichtung nach einem der vorangehenden Ansprüche, dadurch gekennzeichnet, dass dem Filmeingang (I) eine Fflmzuhlürungseinrichtung (FF) vorgeschaltet ist, welche einen an einer Filmeingabestelle (104; 105) manuell oder motorisch in sie eingeführten Filmstreifen zum Filmeingang (I) lenkt und welche eine Abspulvorrichtung (FCP) umfasst, um in einer Patrone (FC) enthaltenen APS-Film automatisch aus dieser zu entnehmen und dem'Filmeingang (I) zuzuführen.

11. Vorrichtung nach Anspruch 10, dadurch gekennzeichnet, dass die Abspulvorrichtung (FCP) einen Patronenlift (130) umfasst, der eine Filmpatrone (FC) in sich aufnehmen und zwischen einer oberen Ladestellung und einer unteren Entladestellung auf und ab transportieren kann, wobei sich die Filmpatrone (FC) in Ladestellung des Patronenlifts ausserhalb einer Gehäuseabdeckung (100) der Abtastvorrichtung und in Entladestellung innerhalb der Gehäuseabdeckung befindet.

12. Vorrichtung nach Anspruch 11, dadurch gekennzeichnet, dass ein motorisch angetriebener Antriebsdorn (135) vorgesehen ist, der mit dem Wickelkern der Filmpatrone (FC) in Dreheingriff gebracht werden kann, wenn sich die Filmpatrone in Entladestellung befindet, wobei durch Rotation des Antriebsdorns (135) der Film (F) aus der Filmpatrone (FC) ausgestossen und wieder in sie zurückgezogen werden kann.

13. Vorrichtung nach einem der vorangehenden Ansprüche, dadurch gekennzeichnet, dass der abzutastende Film (F) vor dem Rotor (R) zwischen zwei mit Führungsnuten (53,54; 111,121, 112, 122) versehenen Führungsplatten (51,52) geführt ist, welche individuell motorisch quer zur Filmlängsrichtung verstellbar sind, wobei ihr gegenseitiger Abstand auf die Breite unterschiedlicher Filmformate eingestellt werden kann.

14. Vorrichtung nach einem der Ansprüche 11 bis 13, dadurch gekennzeichnet, dass mindestens eine Führungsbahn (111,121; 112,122) vorgesehen ist, um als Streifen vorliegenden Film (F) von einer Filmeingabestelle (104; 105) zu den Transportmitteln (T₁) zu leiten.

## Claims

1. Appliance for the photoelectric scanning of photographic films, having a film inlet (I), a film exit (E), a film transport path (P) connecting the film inlet to the film exit, transport means (T₁, T₂, T₃) for transporting a film (F) supplied at the film inlet along the film transport path to the film exit, a scanning platform (SSP) arranged in the film transport path for positioning the film during its scanning, an illumination device (L) for subjecting the film with measurement light in the region of the scanning platform, having a photoelectric converter (CCD) for receiving measurement light let through by the film and converting it, image point by image point, into corresponding electrical signals, and having an optical system (O) for deflecting the measurement light let through by the film onto the converter, characterised in that in order to process films of different film formats, the scanning platform (SSP) has a rotor (R), which is supported so that it can be rotationally adjusted about an axis (A) essentially parallel to the longitudinal direction of the film transport path, and in that the rotor (R) has at least two film mask arrangements (M₁, M₂, M₃) at its periphery for the different film formats, which film mask arrangements (M₁, M₂, M₃) can be selectively introduced into the film transport path (P) by rotational adjustment of the rotor (R).

2. Appliance according to Claim 1, characterised in that the rotor (R) is hollow and has an end surface (R_{S}) with an open configuration and in that a stationary deflection mirror (MR) is arranged within the rotor (R), which deflection mirror (MR) deflects the beam path (L_{R}) of the measurement light entering essentially radially into the rotor through the respective film mask arrangements (M₁, M₂, M₃) located in the film transport path (P) in such a way that the beam path (L_{R}) of the measurement light leaves the rotor (R) through its open end surface (R_{S}) in the essentially axial direction.

3. Appliance according to one of the preceding claims, characterised in that one of the at least two film mask arrangements (M₁, M₂, M₃) is configured for the APS film format, and in that the rotor (R) is equipped at its periphery with a magnetic reading head (MOF) for the magnetically recorded information located on APS films, which magnetic reading head (MOF), together with the film mask (M₁) configured for the APS film format, can be introduced into the film transport path (P) and can be removed again from it.

4. Appliance according to Claim 3, characterised in that the magnetic reading head (MOF) is provided with a cover which can be removed or folded up.

5. Appliance according to one of the preceding claims, characterised in that in association with each film mask arrangement (M₁, M₂, M₃), the rotor (R) is provided at its periphery with film guides (23) parallel to its axis of rotation (A), which film guides (23) together with the respectively associated film mask (M₁, M₂, M₃) can be selectively introduced into the film transport path (P).

6. Appliance according to one of the preceding claims, characterised in that the photoelectric converter (CD) and the optical system (O) can be subjected to motorised adjustment as a function of the film mask arrangement (M₁, M₂, M₃) respectively located in the film transport path (P).

7. Appliance according to one of the preceding claims, characterised in that at least one photoelectric reading head (DX) is provided, in the film transport path (P) before the rotor (R), for DX code contained on the films.

8. Appliance according to Claim 7, characterised in that the at least one reading head (DX) is arranged in such a way that it can also record the perforation of film (F) to be scanned.

9. Appliance according to one of the preceding claims, characterised in that a photoelectric scanning head (FD) for recording image locations contained on the film is provided in the film transport path (P) before the rotor (R).

10. Appliance according to one of the preceding claims, characterised in that a film feed device (FF) is connected upstream of the film inlet (I), which film feed device (FF) deflects a film strip, which has been introduced manually or in motorised fashion at a film input location (104; 105), to the film inlet (I) and which comprises an unwinding appliance (FCP) in order to remove APS film contained in a cartridge (FC) automatically from the latter and to supply it to the film inlet (I).

11. Appliance according to Claim 10, characterised in that the unwinding appliance (FCP) comprises a cartridge lift (130), which accepts a film cartridge (FC) within it and can transport it up and down between an upper loading position and a lower unloading position, the film cartridge (FC) being outside a casing cover (100) of the scanning appliance in the loading position of the cartridge lift and being within the casing cover in the unloading position.

12. Appliance according to Claim 11, characterised in that a motor-driven drive mandrel (135) is provided which can be brought into rotational engagement with the winding core of the film cartridge (FC) when the film cartridge is in the unloading position, it being possible to expel the film (F) from the film cartridge (FC) and to withdraw it again by rotation of the drive mandrel (135).

13. Appliance according to one of the preceding claims, characterised in that the film (F) to be scanned is guided, before the rotor (R), between two guide plates (51, 52) provided with guide grooves (53, 54; 111, 121, 112, 122), which guide plates (51, 52) can be subjected in motorised adjustment transverse to the film longitudinal direction, it being possible to adjust their mutual distance apart to the width of different film formats.

14. Appliance according to one of Claims 11 to 13, characterised in that at least one guide track (111, 121; 112, 122) is provided in order to guide film (F) present as a strip from a film input location (104; 105) to the transport means (T₁).

## Revendications

1. Dispositif de balayage photoélectrique de films photographiques, comportant une entrée de film (I), une sortie de film (E), un chemin de transport de film (P) reliant l'entrée de film à la sortie de film, des moyens de transport (T₁, T₂, T₃), pour transporter un film (F) à balayer, amené à l'entrée de film, le long du chemin de transport de film, vers la sortie de film, une plate-forme de balayage (SSP), disposée dans le chemin de transport de film, pour positionner le film pendant son balayage, un dispositif d'éclairage (L), pour envoyer de la lumière de mesure sur le film, dans la zone de la plate-forme de balayage, comportant un convertisseur photoélectrique (CCD), pour recevoir la lumière de mesure ayant traversé le film, et la convertir, point d'image après point d'image, en signaux électriques correspondants, et comportant une optique (O), pour diriger sur le convertisseur la lumière de mesure qui a traversé le film, caractérisé en ce que, pour traiter des films de formats différents, la plate-forme de balayage (SSP) comporte un rotor (R) qui est monté de manière à pouvoir tourner autour d'un axe (A) sensiblement parallèle à la direction longitudinale du chemin de transport de film, et en ce que le rotor (R) comporte, sur son pourtour, au moins deux dispositifs à masque de film (M₁, M₂, M₃) pour les différents formats de film, lesquels dispositifs à masque de film (M₁, M₂, M₃) peuvent être introduits sélectivement dans le chemin de transport de film (P), par déplacement en rotation du rotor (R).

2. Dispositif selon la revendication 1, caractérisé en ce que le rotor (R) est creux et présente une face frontale (R_{S}) ouverte, et en ce qu'à l'intérieur du rotor (R) est disposé un miroir de déviation (MR) fixe qui dévie le faisceau (L_{R}) de la lumière de mesure, qui pénètre sensiblement radialement dans le rotor, à travers le dispositif à masque de film (M₁, M₂, M₃), se trouvant dans le chemin de transport de film (P), de manière que ce faisceau sorte du rotor (R), à travers sa face frontale (Rₛ) ouverte, dans une direction sensiblement axiale.

3. Dispositif selon l'une des revendications précédentes, caractérisé en ce que l'un des dispositifs à masque de film (M₁, M₂, M₃), au moins au nombre de deux, est conçu pour le format de film APS, et en ce que le rotor (R) est équipé, sur son pourtour, d'une tête de lecture magnétique (MOF) pour l'information enregistrée magnétiquement sur des films APS, laquelle tête de lecture magnétique (MOF) peut être introduite dans le chemin de transport de film (P) et à nouveau enlevée de celui-ci, avec le masque de film (M₁) conçu pour le format de film APS.

4. Dispositif selon la revendication 3, caractérisé en ce que la tête de lecture magnétique (MOF) est pourvue d'une couverture amovible ou rabattable.

5. Dispositif selon l'une des revendications précédentes, caractérisé en ce que le rotor (R) est pourvu, sur son pourtour, d'organes de guidage de film (23), parallèles à son axe de rotation (A), affectés chacun à un dispositif à masque de film (M₁, M₂, M₃), lesquels organes de guidage peuvent être introduits sélectivement dans le chemin de transport de film (P), avec le masque de film (M₁, M₂, M₃) affecté à chacun.

6. Dispositif selon l'une des revendications précédentes, caractérisé en ce que le convertisseur photoélectrique (CCD) et l'optique (O) sont déplaçables de manière motorisée en fonction du dispositif à masque de film (M₁, M₂, M₃) qui se trouve chaque fois dans le chemin de transport de film (P).

7. Dispositif selon l'une des revendications précédentes, caractérisé en ce qu'il est prévu au moins une tête de lecture photoélectrique (DX) pour un code-DX contenu sur des films, dans le chemin de transport de film (P), devant le rotor (R).

8. Dispositif selon la revendication 7, caractérisé en ce que la ou les tête(s) de lecture (DX) est ou sont disposée(s) de manière qu'elle(s) puisse(nt) détecter aussi la perforation d'un film (F) à balayer.

9. Dispositif selon l'une des revendications précédentes, caractérisé en ce qu'une tête de balayage photoélectrique (FT) est prévue dans le chemin de transport de film (P), devant le rotor (R), pour détecter des points d'image contenus sur le film.

10. Dispositif selon l'une des revendications précédentes, caractérisé en ce que devant l'entrée de film (I) est monté un dispositif de guidage de film (FF) qui guide vers l'entrée de film (I), une bande de film introduite manuellement ou de manière motorisée, en un point d'introduction de film (104 ; 105), et qui comprend un dispositif de dévidage (FCP), pour prélever automatiquement un film (APS) contenu dans une cartouche (FC), et l'amener à l'entrée de film (I).

11. Dispositif selon la revendication 10, caractérisé en ce que le dispositif de dévidage (FCP) comprend un lève-cartouche (130), qui peut recevoir une cartouche de film (FC) et la transporter vers le haut et vers le bas, entre une position de chargement supérieure et une position de déchargement inférieure, la cartouche de film (FC) en position de chargement du lève-cartouche se trouvant à l'extérieur d'un capot de boîtier (100) du dispositif de balayage et en position de déchargement, à l'intérieur du capot de boîtier.

12. Dispositif selon la revendication 11, caractérisé en ce qu'il est prévu une broche d'entraînement (135) entraînée de manière motorisée, qui peut être amenée en engagement de rotation avec l'axe de bobinage de la cartouche de film (FC), lorsque la cartouche de film se trouve en position de déchargement, le film (F) pouvant être éjecté de la cartouche de film (FC) et tiré à nouveau à l'intérieur de celle-ci, par rotation de la broche d'entraînement (135).

13. Dispositif selon l'une des revendications précédentes, caractérisé en ce que le film (F) à balayer est guidé devant le rotor (R), entre deux plaques de guidage (51, 52) pourvues de rainures de guidage (53, 54 ; 111, 121, 112, 122), qui sont déplaçables individuellement et de manière motorisée, transversalement par rapport au sens de la longueur du film, leur écartement pouvant être réglé sur la largeur de formats de film différents.

14. Dispositif selon l'une des revendications 11 à 13, caractérisé en ce qu'il est prévu au moins une voie de guidage (111, 121; 112, 122) pour diriger le film (F), se trouvant sous la forme d'une bande, d'un point d'introduction de film (104 ; 105) vers les moyens de transport (T1).
